# EUROPEAN PATENT APPLICATION

(11) **EP 4 047 692 A2**
(43) Date of publication of application: **24.08.2022**
(21) Application number: 20877965.2
(22) Date of filing: 19.10.2020
(51) Int. Cl.: H01M 4/525

(54) **LITHIUM SECONDARY BATTERY CATHODE ACTIVE MATERIAL, MANUFACTURING METHOD THEREFOR, AND LITHIUM SECONDARY BATTERY COMPRISING SAME**

(30) Priority: 18.10.2019 KR 20190130033
(71) Applicant: ECOPRO BM CO., LTD., Cheongju-si, Chungcheongbuk-do 28117 (KR)
(72) Inventor: CHOI, Moon Ho, Cheongju-si, Chungcheongbuk-do 28118 (KR); HEO, Gyeong Jae, Cheongju-si Chungcheongbuk-do 28118 (KR); CHOI, Seung Hyun, Cheongju-si, Chungcheongbuk-do 28118 (KR)
(74) Representative: J A Kemp LLP
(86) International application number: PCT/KR2020/014281
(87) International publication number: WO 2021/075941

(57) **Abstract**

The present invention comprises: an overlithiated layered oxide represented by chemical formula 1 below; and an ion-conductive coating layer on the overlithiated layered oxide represented by chemical formula 1: [chemical formula 1] ᵣLi₂MnO₃·(1-r)LiₐNiₓCo_{y}Mn_{z}M1_{1-(x-y-z)}O₂ (in chemical formula 1, 0<r**≤**0.6, 0<a≤1, 0≤x≤1, 0<y≤1, 0≤z<1, and 0<x+y+z≤1, and M1 is at least one selected from among Na, K, Mg, Al, Fe, Cr, Y, Sn, Ti, B, P, Zr, Ru, Nb, W, Ba, Sr, La, Ga, Mg, Gd, Sm, Ca, Ce, Fe, Al, Ta, Mo, Sc, V, Zn, Cu, In, S, B, Ge, Si, and Bi).

## Description

### [Technical Field]

The present invention relates to a cathode active material containing overlithiated layered oxide, and more particularly to a cathode active material for a lithium secondary battery having an ion-conductive coating layer formed on the surface thereof, a method for preparing the same, and a lithium secondary battery containing the same.

### [Background Art]

The development of portable mobile electronic devices, such as mobile phones, MP3 players, and tablet PCs, has brought about an explosive increase in the demand for secondary batteries capable of storing electrical energy. In particular, with the advent of electric vehicles, medium- and large-sized energy storage systems, and portable devices requiring high energy density, the demand for lithium secondary batteries has increased.

A cathode active material that has recently been in the spotlight is lithium nickel manganese cobalt oxide Li(NiₓCo_{y}Mn_{z})O₂ (wherein x, y, and z are each independently atomic fractions of oxide-constituting elements, and satisfy 0<x≤1, 0<y≤1, 0<z≤1, and 0<x+y+z≤1). This cathode active material has an advantage of achieving high capacity because it is used at a higher voltage than LiCoO₂, which has been actively researched and used as a cathode active material, and has another advantage of being inexpensive due to the relatively low Co content thereof. However, this material has disadvantages of unsatisfactory rate capability and poor lifetime characteristics at high temperatures.

Accordingly, research has been conducted to apply overlithiated layered oxide, which exhibits a higher reversible capacity than conventional Li(NiₓCo_{y}Mn_{z})O₂, to a lithium secondary battery.

However, such overlithiated layered oxide (OLO) has problems in that decreased discharge capacity (cycle life) and voltage decay occur during lifetime cycling, which is due to phase transition from a spinel-like structure to a cubic structure due to transition metal migration during lifetime cycling. These decreased discharge capacity (cycle life) and voltage decay of the overlithiated layered oxide (OLO) are problems that must be solved in order to realize practical application thereof to a lithium secondary battery.

In addition, there is a need for a solution capable of improving the electrochemical properties of overlithiated layered oxide.

### [Disclosure]

### [Technical Problem]

It is one object of the present invention to improve the lithium ion conductivity of a cathode active material containing overlithiated layered oxide and reduce the resistance thereof, thereby reducing overvoltage during charging and discharging and improving high-rate characteristics.

It is another object of the present invention to suppress the elution of Mn from an Mn-rich cathode active material and the lattice change from a spinel phase to a rock-salt phase that begins from the surface of the cathode active material during cycling, and to thereby suppress a decrease in discharge capacity (cycle life) and voltage decay and increase the lifetime thereof.

### [Technical Solution]

In accordance with one aspect of the present invention, the above and other objects can be accomplished by the provision of a cathode active material containing an overlithiated layered oxide represented by the following Formula (1):

[Formula 1] rLi₂MnO₃·(1-r)LiₐNiₓCo_{y}Mn_{z}M1_{1-(x+y+z)}O₂

(wherein r, a, x, y, and z satisfy 0<r≤0.6, 0<a≤1, 0≤x≤1, 0<y≤1, 0≤z<1, and 0<x+y+z≤1, and M1 includes at least one selected from Na, K, Mg, Al, Fe, Cr, Y, Sn, Ti, B, P, Zr, Ru, Nb, W, Ba, Sr, La, Ga, Mg, Gd, Sm, Ca, Ce, Fe, Al, Ta, Mo, Sc, V, Zn, Cu, In, S, B, Ge, Si, and Bi).

The overlithiated layered oxide may be a solid solution phase in which Li₂MnO₃ having a monoclinic structure is mixed with LiMO₂ having a rhombohedral structure, wherein M may include at least one selected from Ni, Co, Mn, and M1.

In addition, in the overlithiated layered oxide, a plateau attributable to Li₂MnO₃ may appear at 4.4 V in the initial charge/discharge profile. In the overlithiated layered oxide according to an embodiment of the present invention, during initial charging, the Li₂MnO₃ phase is electrochemically inactive up to 4.4V, unlike lithium, and lithium deintercalation from the Li₂MnO₃ phase and oxygen evolution occur at 4.4 V or higher.

The ratio (Li/Ni+Co+Mn) of the number of moles of lithium to the total number of all metals contained among Ni, Co, or Mn in the overlithiated layered oxide represented by Formula 1 may be 1.1 to 1.6, 1.2 to 1.6, 1.3 to 1.6, or 1.4 to 1.5.

In Formula 1, x may be more than 0 and not more than 0.5, more than 0 and not more than 0.4, more than 0 and not more than 0.3, more than 0 and not more than 0.2, or more than 0 and not more than 0.1.

In Formula 1, y may be more than 0 and not more than 0.5, more than 0 and not more 0.4, more than 0 and not more than 0.3, more than 0 and not more than 0.2, or 0.1 to 0.2.

In Formula 1, M1 includes at least one selected from Na, K, Mg, Al, Fe, Cr, Y, Sn, Ti, B, P, Zr, Ru, Nb, W, Ba, Sr, La, Ga, Mg, Gd, Sm, Ca, Ce, Fe, Al, Ta, Mo, Sc, V, Zn, Nb, Cu, In, S, B, Ge, Si and Bi, and is for example a dopant that may be contained in the overlithiated layered oxide. More preferably, M1 may include at least one selected from Ba, Sr, B, P, Y, Zr, Nb, Mo, Ta, and W, which further grow primary particles to more suitably adjust the size thereof to a predetermined range, most preferably at least one selected from Nb and Ta.

In addition, the ratio (Mn/Ni) of the number of moles of Mn to the total number of moles of Ni may be 1 to 4.5, 1 to 4, 2 to 4.5, 2 to 4, 3 to 4.5, or 3 to 4.

The oxide of the present invention may have a layered structure in which a lithium atomic layer alternately overlaps a metal atomic layer of Ni, Co, Mn, or M1 via an oxygen atomic layer interposed therebetween.

The plane forming the layer in the layered structure of the cathode active material may have a crystal orientation in a direction perpendicular to the C axis. In this case, the mobility of lithium ions contained in the cathode active material is improved, the structural stability of the cathode active material is improved, and thus initial capacity characteristics, output characteristics, resistance characteristics, and long-term lifetime characteristics are improved upon application to a battery.

The cathode active material according to the present invention is capable of inhibiting Mn elution from oxide containing large amounts of lithium and manganese by forming an ion-conductive coating layer on the surface thereof, and is capable of inhibiting a decrease in discharge capacity (cycle life) and voltage decay by suppressing a lattice change to a rock-salt phase from a spinel phase starting from the surface of cathode active material during cycling.

In addition, in the present invention, the ion-conductive coating layer is coated on the surface of overlithiated layered oxide particles, thereby reducing resistance due to improved ionic conductivity and suppressing lifetime decrease and voltage decay.

In addition, in the present invention, the ion-conductive coating layer is coated on the surface of the overlithiated layered oxide particles, thereby reducing the overvoltage generated in the overlithiated layered oxide during charging and discharging and improving high rate characteristics.

In order to accomplish the effects, the ion-conductive coating layer may contain at least one element selected from Ti, Al and Zr.

In addition, the ion-conductive coating layer may contain a material represented by Formula 2 below:

[Formula 2] LiₐM2_{b}O_{c}

In Formula 2, a, b, and c may satisfy 0<a≤ 4, 0<b**≤** 5 and 0<c**≤** 12, and M2 may include at least one selected from Ti, Al, and Zr.

In order to accomplish the effects, the ion-conductive coating layer may be present in an amount of 0.05 to 5 mol%, 0.1 to 3 mol%, 0.1 to 2 mol%, or 0.5 to 2 mol% of the overlithiated layered oxide.

The ion-conductive coating layer may be uniformly or non-uniformly present on the surface of the overlithiated layered oxide represented by Formula 1 above.

Also, for example, the ion-conductive coating layer may be formed on the surface of each of secondary particles or primary particles.

Also, for example, an element contained in the ion-conductive coating layer on the surface of secondary particles or primary particles may form a concentration gradient.

In the cathode active material according to an embodiment of the present invention, the thickness of the ion-conductive coating layer may be 1 to 100 nm, more preferably 10 to 100 nm. When the ion-conductive coating layer has a thickness smaller than the lower limit, the improvement may be insufficient, and when the coating layer has a thickness greater than the upper limit, resistance to lithium ions may increase. When the ion-conductive coating layer falls within the range defined above, elution of Mn from the Mn-rich cathode active material of the present invention is suppressed and the lattice change from the spinel phase to the rock-salt phase starting from the surface of cathode active material during cycling is suppressed, so decreased discharge capacity and voltage decay can be suppressed and the lifetime can be increased.

In the cathode active material according to an embodiment of the present invention, primary particles aggregate to form secondary particles, and the ratio of primary particles having a size of 300 nm to 10 µm to the total volume of primary particles constituting the secondary particles may be adjusted to 50 to 100% by volume, 70 to 100% by volume, or 100% by volume.

In another embodiment, in the cathode active material, the ratio of primary particles having a size of 500 nm to 10 µm to the total volume of primary particles constituting the secondary particles may be adjusted to 50 to 100% by volume, 70 to 100% by volume, or 100% by volume.

In another embodiment, in the cathode active material, the ratio of primary particles having a size of 1 µm to 10 µm to the total amount of overlithiated layered oxide may be adjusted to 50 to 100% by volume, 70 to 100% by volume, or 100% by volume.

In another embodiment, in the cathode active material, the ratio of primary particles having a size greater than 1 µm to the total amount of overlithiated layered oxide may be adjusted to 50 to 100% by volume, 70 to 100% by volume, or 100% by volume.

In another embodiment, in the cathode active material, the ratio of primary particles having a size of 2 µm or more to the total amount of overlithiated layered oxide is adjusted to 50 to 100% by volume or 50 to 70% by volume.

In another embodiment, in the cathode active material, the size of the primary particles is adjusted, so the number of primary particles present in the secondary particles is adjusted to 1 to 1,000, 1 to 100, 1 to 10, or 1.

The size of the primary particles means the maximum length of the particles.

In addition, as an example, the average particle diameter of the primary particles of the cathode active material may be adjusted to greater than 500nm to not greater 10µm, or 1µm to 10µm.

According to the present invention, the size of the primary particles can be adjusted in order to solve the problems of decreased discharge capacity and voltage decay and increase the density of the cathode active material.

However, the lithium ion diffusion distance increases when the size of primary particles increases, so there is a problem in that overpotential is generated due to concentration polarization of lithium ions during charging and discharging. As a result, kinetics may be lowered and thus the capacity of the cathode active material may be reduced. However, by forming the ion-conductive coating layer, it is possible to enhance the kinetics of lithium ions, thereby increasing the capacity and decreasing the overvoltage.

The average particle diameter of the secondary particles of the cathode active material according to an embodiment of the present invention may be 2 to 20 µm.

As used herein, the term "average particle size" may be defined as a particle size corresponding to 50% of the cumulative volume in a particle size distribution curve of the particles. The average particle diameter may be measured using, for example, a laser diffraction method.

In the cathode active material according to an embodiment of the present invention, the size of the primary particles in the cathode active material stage is increased compared to the size of the primary particles in the precursor stage under the preparation process conditions according to the following Examples. In addition, in the preparation process conditions according to the following Examples, the ratio (size of primary particles of cathode active material added with dopant acting as flux) / (size of primary particles of cathode active material without dopant acting as flux) is 1 or more, more preferably 30 or more, and most preferably 50 or more.

In Formula 1, M1 is a dopant that acts as a flux for growing the primary particles, and may be doped into a lattice structure. In an embodiment, by adding a flux dopant during calcination with a lithium compound, followed by mixing and heat-treatment, the size of the primary particles can be increased to a desired level. The term "acting as a flux" means that a substance can act as a dopant that increases the size of the primary particles through growth of the primary particles.

In the cathode active material according to an embodiment of the present invention, as the number of parts corresponding to the single crystal structure increases, that is, as the number of primary particles decreases, the problem of voltage decay in polycrystals can be further solved.

In XRD analysis of the cathode active material according to an embodiment of the present invention, the full width at half maximum (FWHM(deg.)) at I (104) may be 0.1 to 0.25 (deg.), but may vary depending on the manganese content. Accordingly, by controlling the decrease rate of the full width at half maximum through addition and control of content of the dopant M1, the problems related to lifetime and voltage decay can be solved.

In the present invention, the full width at half maximum (FWHM(deg.)) in 1(104) in XRD analysis upon calcination under the same conditions can be decreased to 5 to 50%, 5 to 40%, 5 to 30%, 5 to 20%, 10 to 25%, or 10 to 20% when M1 is contained, compared to Comparative Example in which M1 is not contained, by increasing the size of primary particles in the overlithiated layered oxide.

The cathode active material according to an embodiment of the present invention may contain a material represented by the following Formula 3. The material represented by the following Formula 3 may be a material produced by reaction between lithium and a dopant acting as a flux that induces the growth of primary particles.

[Formula 3] LiₐM3O_{b}

(wherein a and b satisfy 0<a≤8 and 0<b≤15, and M3 includes at least one selected from Na, K, Mg, Al, Fe, Cr, Y, Sn, Ti, B, P, Zr, Ru, Nb, W, Ba, Sr, La, Ga, Mg, Gd, Sm, Ca, Ce, Fe, Al, Ta, Mo, Sc, V, Zn, Cu, In, S, B, Ge, Si and Bi.)

M1 of Formula 1 may be present in an amount of 0.001 to 10 mol%, 0.01 to 5.0 mol%, 0.01 to 3.0 mol%, 0.1 to 2.0 mol%, or 0.1 to 1.0 mol% based on the total number of moles of metals included in the cathode active material. When the content of dopant M1 as a flux inducing the growth of primary particles exceeds the above range, lithium composite oxide may be produced in excess, which may decrease capacity and efficiency, and when the content is less than the above range, the effect of growing primary particles may be insufficient.

In addition, the energy density per unit volume (Wh/L) of the cathode active material according to an embodiment of the present invention may be 2.7 to 4.0 (Wh/L).

In addition, the energy density per unit volume (Wh/L) of the cathode active material according to the embodiment of the present invention may be increased by 5 to 30% compared to a material not containing M1. The cathode active material according to the present invention is controlled to increase the size of primary particles in the overlithiated layered oxide, so the energy density per unit volume (Wh/L) is 5 to 25%, 5 to 20%, 10 to 25%, or 10 to 20% when M1 is contained, compared to Comparative Example in which M1 is not contained.

In addition, the filling density (g/cc) of the cathode active material adjusted through addition of the dopant M1 and control of content thereof may be 2.0 to 4.0 (g/cc).

In addition, the specific surface area (BET, m²/g) of the cathode active material, adjusted through addition of the dopant M1 and control of content thereof, may be 0.1 to 1.5 (BET, m²/g).

In the cathode active material according to the present invention, by controlling the size of primary particles in the overlithiated layered oxide, the specific surface area (BET, m²/g) can be decreased to 20 to 80% when M1 is contained compared to Comparative Example, in which M1 is not contained.

The present invention causes the growth of primary particles to control the portion corresponding to the single crystal structure of the cathode active material, thereby increasing the energy density per unit volume, decreasing the specific surface area, reducing the surface area of the cathode active material, and solving problems related to lifetime and voltage decay. In the present invention, the expression "causing the growth of primary particles" includes all concepts of nucleation, Ostwald ripening, and particle aggregation.

The method for preparing a cathode active material according to an embodiment of the present invention includes a first step of preparing a cathode active material precursor, for example, carbonate or hydroxide.

The average particle diameter of the precursor particles may be 2 to 20 µm.

Preparation of the precursor may be performed using co-precipitation, spray-drying, solid-phase reaction, wet grinding, fluidized bed drying, or vibration drying, but is not particularly limited thereto.

The method of preparing a cathode active material according to an embodiment of the present invention may further include, after the first step and before the second step, roasting the prepared precursor at 300 to 600°C or 500 to 600°C.

The method for preparing a cathode active material according to an embodiment of the present invention may further include, after the first step and before the second step, washing the calcined material with water, followed by drying.

The method may further include a second step of mixing the cathode active material precursor with a lithium compound, followed by calcination to form lithium composite oxide.

In the second step, a compound containing M1 of Formula 1 may be further mixed and calcined. M1 may be mixed in an amount of 0.1 to 1.0 mol%, or 0.3 to 0.8 mol%, based on the overlithiated layered oxide particles.

In order to accomplish the effects, the temperature of the calcination may be 750 to 950°C, or 850 to 950°C.

The method for preparing a cathode active material according to an embodiment of the present invention may further include, after the second step and before the third step, washing the calcined material with water, followed by drying.

Then, the method includes a third step of mixing the lithium composite oxide formed in the second step with a coating precursor to form an ion-conductive coating layer.

In the present invention, the ion-conductive coating layer may be uniformly applied onto the surface of the overlithiated layered oxide through the following process.

In the third step, the coating precursor may be performed through a dry mixing process.

In addition, the coating precursor may be mixed by a wet mixing process in the third step, and may, for example, be dispersed or dissolved in water, alcohol, or a dispersion solution and mixed with the material formed in the second step.

The third step may further include, after mixing the material formed in the second step with the coating precursor, allowing the mixture to stand at 400 to 800°C or 600 to 800°C for 7 to 12 hours and then subjecting the mixture to furnace cooling.

For example, when the ion-conductive coating layer contains at least one selected from Ti, Al, and Zr, the coating precursor includes at least one selected from TiO₂, Al₂O₃, Al(OH)₃, ZrO₂, and Zr(OH)₄, but is not particularly limited thereto.

A secondary battery according to an embodiment of the present invention includes the cathode active material.

The cathode active material is the same as described above, and the binder, conductive material, and solvent are not particularly limited, as long as they can be used for a cathode current collector of a secondary battery.

The lithium secondary battery may specifically include a cathode, an anode facing the cathode, and an electrolyte between the cathode and the anode, but is not limited to this configuration, as long as it can be used as a secondary battery.

### [Advantageous Effects]

The present invention is capable of improving lithium ion conductivity in the overlithiated layered oxide, reducing resistance, reducing overvoltage generated during charging and discharging, and improving high-rate characteristics.

In addition, the present invention is capable of suppressing the elution of Mn from the Mn-rich cathode active material and suppressing the lattice change from the spinel phase to the rock-salt phase starting from the surface of the cathode active material during cycling, thereby suppressing a decrease in discharge capacity and voltage decay, and prolonging the lifetime thereof.

### [Description of Drawings]

FIG. 1 shows the results of EDS performed on an embodiment of the present invention.
FIG. 2 shows the result of EDS performed on an embodiment of the present invention.
FIG. 3 shows the results of SEM performed on Examples and Comparative Examples of the present invention.
FIG. 4 shows the results of XRD analysis performed on Examples and Comparative Examples of the present invention.
FIG. 5 shows the results of XRD analysis performed on Examples and Comparative Examples of the present invention.
FIG. 6 is a graph showing charge/discharge characteristics of Examples and Comparative Examples of the present invention.
FIG. 7 is an overvoltage curve of Examples and Comparative Examples of the present invention.
FIG. 8 is a rate characteristic curve according to Examples and Comparative Examples of the present invention.
FIG. 9 shows the life characteristics according to Examples and Comparative Examples of the present invention.
FIG. 10 shows the life characteristics according to Examples and Comparative Examples of the present invention.
FIG. 11 is a voltage graph according to Examples and Comparative Examples of the present invention.
FIG. 12 is a voltage graph according to Examples and Comparative Examples of the present invention.

### [Best Mode]

Hereinafter, the present invention will be described in more detail with reference to Examples. However, these examples should not be construed as limiting the present invention.

As used herein, terms such as "comprising" should be understood as open-ended terms that do not preclude the inclusion of other elements.

As used herein, the terms "preferred" and "preferably" refer to embodiments of the present invention that may provide certain advantages in specific environments, and are not intended to exclude other embodiments from the scope of the invention.

### <Example 1> Preparation of cathode active material

### Synthesis

A spherical Ni_{0.2}Co_{0.1}Mn_{0.7}CO₃ precursor was synthesized using a co-precipitation method. 25 wt% of NaCO₃ and 28 wt% of NH₄OH were added to a 2.5M composite transition metal sulfate solution prepared by mixing NiSO₄·6H₂O, CoSO₄·7H₂O, and MnSO₄·H₂O at a molar ratio of 20:10:70 in a 90 L reactor. At this time, the pH in the reactor was maintained at 10.0 to 12.0, and the temperature thereof was maintained at 45 to 50°C. In addition, N₂, which is an inert gas, was injected into the reactor to prevent oxidation of the prepared precursor.

After completion of synthesis, washing and dehydration were performed using a filter press (F/P). Finally, the dehydrated product was dried at 120°C for 2 days and filtered through a 75 µm (200 mesh) sieve to obtain a Ni_{0.2}O_{0.1}Mn_{0.7}CO₃ precursor having a size of 18 µm and 4 µm.

### Roasting

The prepared precursor was maintained in an O₂ or air (50L/min) atmosphere in a box furnace, and the temperature was elevated at a rate of 2°C/min and maintained at 550°C for 1 to 6 hours, followed by furnace cooling.

### Calcination

LiOH or Li₂CO₃ was weighed such that the roasted precursor had a Li/(Ni+Co+Mn) ratio of 1.45, and 0.6 mol% of Nb₂O₅ was weighed as a flux dopant, followed by mixing using a manual mixer (MM).

The mixture was maintained under an O₂ or air (50 L/min) atmosphere in a box furnace, heated at 2°C/min, and maintained at a calcination temperature of 900°C for 7 to 12 hours, followed by furnace cooling to prepare lithium composite oxide particles.

### Coating

1.0 mol% of TiO₂ was weighed as a surface treatment dopant and mixed using a mixer (manual mixer, MM) .

The mixture was maintained under an O₂ or air (50 L/min) atmosphere in a box furnace, heated at 4.4°C/minute, and maintained at a sintering temperature of 700°C for 7 to 12 hours, followed by furnace cooling to prepare a cathode active material.

### <Example 2> Preparation of cathode active material

A cathode active material was prepared in the same manner as in Example 1, except that 1.0 mol% of Al₂O₃ was mixed as a surface treatment dopant in the coating step of Example 1.

### <Example 3> Preparation of cathode active material

A cathode active material was prepared in the same manner as in Example 1, except that 1.0 mol% of n-ZrO₂ was mixed as a surface treatment dopant in the coating step of Example 1.

### <Example 4> Preparation of cathode active material

A cathode active material was prepared in the same manner as in Example 1, except that 0.19 mol% of TiO₂, 0.77 mol% of Al₂O₃, and 0.04 mol% of n-ZrO₂ were mixed as a surface treatment dopant in the coating step of Example 1.

### <Comparative Example 1> Preparation of cathode active material

A cathode active material was prepared in the same manner as in Example 1, except that a flux dopant was not mixed and a coating step was not performed.

### <Comparative Example 2> Preparation of cathode active material

A cathode active material was prepared in the same manner as in Example 1, except that the coating step of Example 1 was not performed.

### <Production Example> Production of lithium secondary battery

90 wt% of each of the cathode active materials according to Examples and Comparative Examples, 5.5 wt% of carbon black, and 4.5 wt% of a PVDF binder were dispersed in 30 g of N-methyl-2 pyrrolidone (NMP) to prepare a cathode slurry. The cathode slurry was applied to a 15 µm-thick aluminum (Al) thin film, which is a cathode current collector, dried, and then roll-pressed to produce a cathode. The loading amount of the cathode was 5.5 mg/cm² and the electrode density was 2.3 g/cm³.

For the cathode, metallic lithium was used as a counter electrode, and a mixture of 1M LiPF₆ and EC/DMC (1/1, v/v) was used as an electrolyte.

A separator formed of a porous polyethylene (PE) film was injected between the cathode and the anode to form a battery assembly, and the electrolyte was injected into the battery assembly to produce a lithium secondary battery (coin cell).

### <Experimental example>

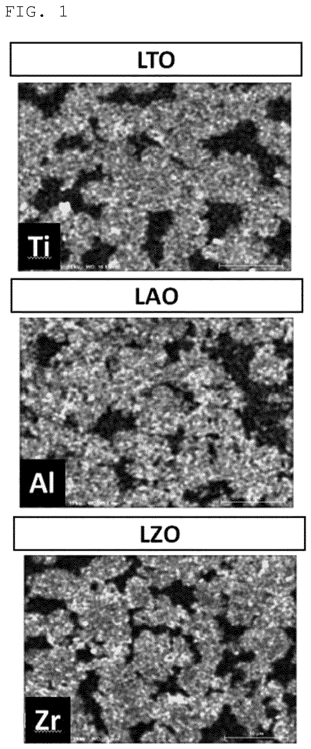

As can be seen from FIG. 1, the Ti, Al, and Zr coating layers are uniformly distributed on the surface of the cathode active material according to Examples 1 to 3.

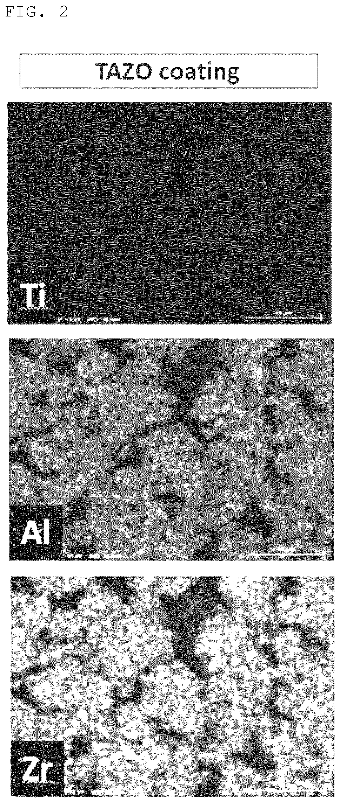

As can be seen from FIG. 2, the Ti, Al and Zr coating layers are uniformly distributed on the surface of the cathode active material according to Example 4.

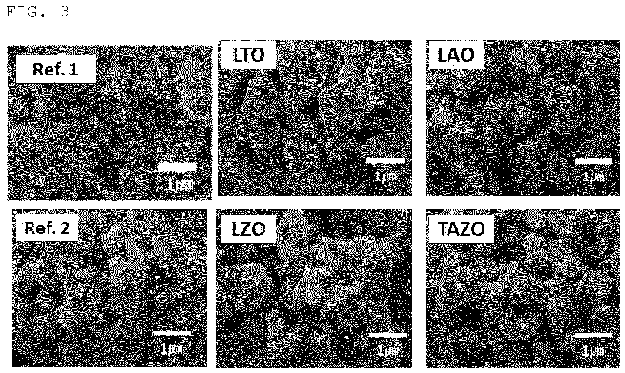

As can be seen from FIG. 3, primary particles are grown by the flux dopant Nb, and Ti, Al, and Zr coating layers are formed on the grown primary particles.

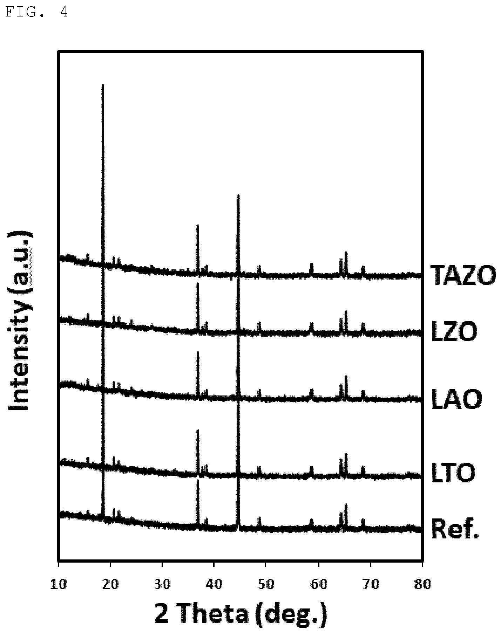

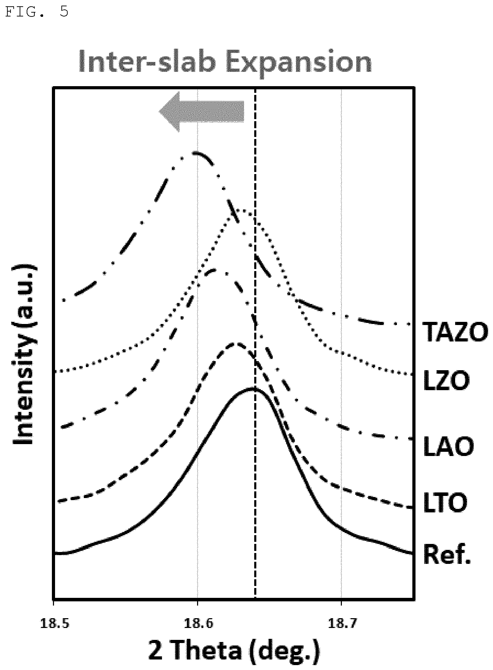

The XRD analysis of FIGS. 4 and 5 were performed using a wavelength of CuKa radiation = 1.5406 Å. As can be seen from FIGS. 4 and 5, the dopant for surface treatment is partially doped on the particle surface. In addition, it can be seen that the diffusion of lithium ions is facilitated due to inter-slab expansion caused by partial doping.

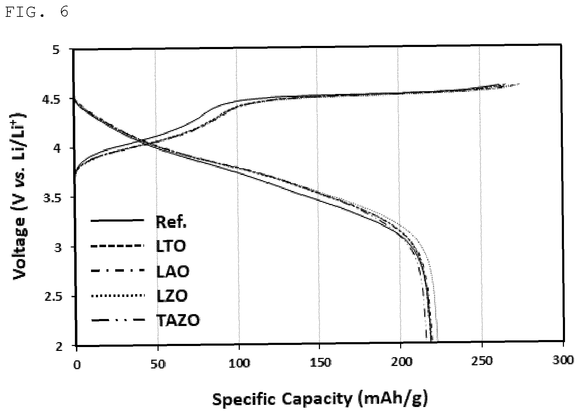

As can be seen from FIG. 6, in Comparative Example 2, the lithium ion diffusion distance increases as the size of primary particles increases, thus causing problems of reduced kinetics and a slight decrease in capacity. On the other hand, in Example, in which an ion conductive coating layer is formed, the capacity increases. This is because the kinetics of lithium ions is increased due to the increased ionic conductivity.

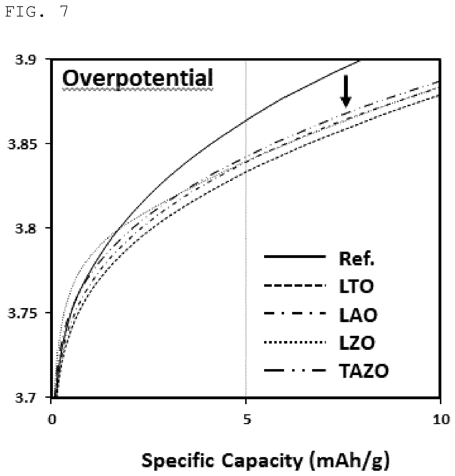

As can be seen from FIG. 7, as the particle size increases, the diffusion distance of lithium ions increases, which causes a problem in which overpotential is generated due to concentration polarization of lithium ions. However, in Examples, in which the ion-conductive coating layer is formed, the overvoltage is reduced due to the increased kinetics of lithium ions.

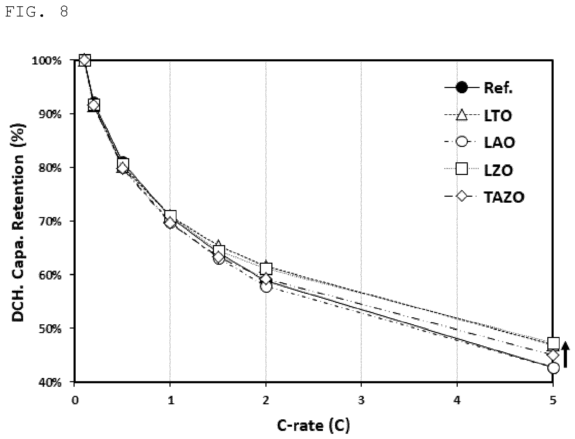

As can be seen from FIG. 8, the rate characteristics of Examples are improved by about 10% or more compared to Comparative Example 2. This is because the resistance is reduced due to the ion-conductive coating layer.

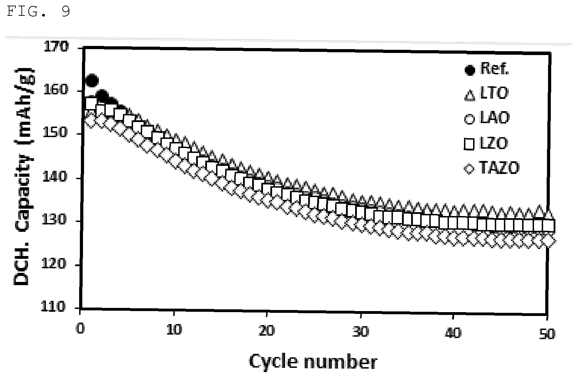

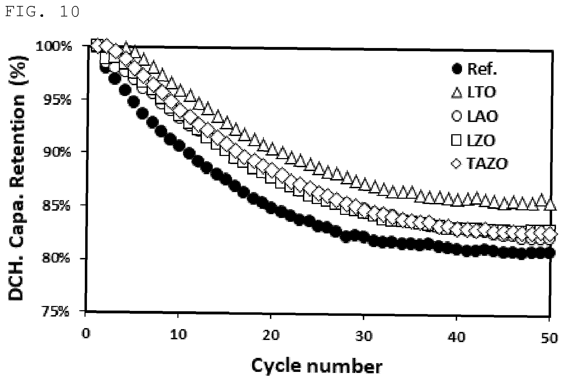

As can be seen from FIGS. 9 and 10, the lifetime characteristics of Examples are improved, and the capacity retention rate is 80% or more compared to Comparative Example 2. This is because resistance is reduced by the ion-conductive coating layer, Mn elution is suppressed, and the phase change from the spinel phase to the rock salt phase starting from the surface during cycling is suppressed.

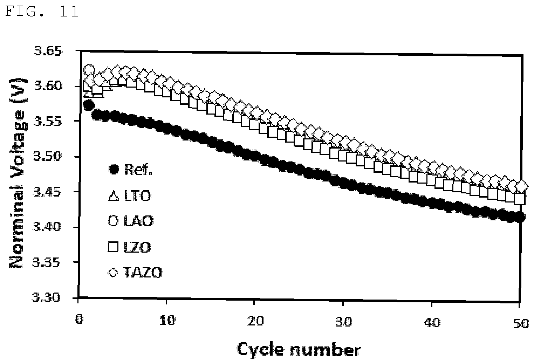

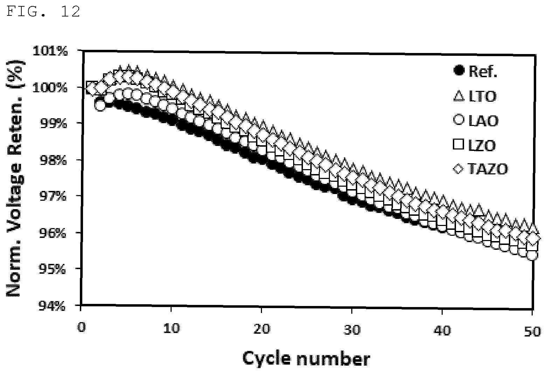

As can be seen from FIGS. 11 and 12, Examples exhibit an improved voltage retention rate compared to Comparative Example 2. This is because the phase change of the overlithiated layered oxide, occurring during cycling, is suppressed due to the ion-conductive coating layer.

The experimental results are shown in Table 1 below.

**[Table 1]**

| ITEM | | | Comparative Example 1 | Comparative Example 2 | Example 1 | Example 2 | Example 3 | Example 4 |
|---|---|---|---|---|---|---|---|---|
| Initial (@25°C) 0.1C 2.0-4.6V | CH. | mAh/g | - | 262 | 265 | 273 | 274 | 270 |
| | DCH. | | - | 218 | 218 | 219 | 222 | 216 |
| | Eff. | % | - | 83.4 | 82.3 | 80.2 | 81.1 | 79.9 |
| High-rate 5C/0.1C | Rate | | 36 | 42.7 | 47.0 | 43.7 | 47.3 | 45.1 |
| Lifetime (@25°C) 1C/1C 2.0-4.6V | Cycle Life (50 cycle) | | 60 | 80.9 | 85.6 | 82.2 | 83.0 | 82.7 |
| | Voltage Decay (50 cycle) | | 95 | 95.7 | 96.3 | 96.0 | 96.1 | 96.2 |

## Claims

1. A cathode active material for a lithium secondary battery comprising:
overlithiated layered oxide represented by Formula 1 below; and
an ion-conductive coating layer formed on a surface of the overlithiated layered oxide represented by Formula 1,
[Formula 1] rLi₂MnO₃·(1-r)LiₐNiₓCo_{y}Mn_{z}M1_{1-(x+y+z)}O₂
wherein r, a, x, y, and z satisfy 0<r≤0.6, 0<a≤1, 0≤x≤1, 0<y≤1, 0≤z<1, and 0<x+y+z≤1, and
M1 comprises at least one selected from Na, K, Mg, Al, Fe, Cr, Y, Sn, Ti, B, P, Zr, Ru, Nb, W, Ba, Sr, La, Ga, Mg, Gd, Sm, Ca, Ce, Fe, Al, Ta, Mo, Sc, V, Zn, Cu, In, S, B, Ge, Si, and Bi.

2. The cathode active material according to claim 1, wherein the ion-conductive coating layer comprises at least one selected from Ti, Al, and Zr.

3. The cathode active material according to claim 1, wherein the ion-conductive coating layer comprises a material represented by Formula 2 below:
[Formula 2] LiₐM2_{b}O_{c}
wherein a, b, and c satisfy 0<a**≤** 4, 0<b**≤** 5, and 0<c**≤** 12, and M2 comprises at least one selected from Ti, Al, and Zr.

4. The cathode active material according to claim 1, wherein the ion-conductive coating layer is present in an amount of 0.05 to 5 mol% based on an amount of the overlithiated layered oxide.

5. The cathode active material according to claim 1, wherein the ion-conductive coating layer has a thickness of 1 to 100 nm.

6. The cathode active material according to claim 1, wherein primary particles aggregate to form secondary particles, and
primary particles having a size of 300 nm to 10 µm are present in an amount of 50 to 100 vol% based on a total amount of the primary particles constituting the secondary particles.

7. The cathode active material according to claim 1, wherein M1 in Formula 1 acts as a flux growing the primary particles.

8. The cathode active material according to claim 1, wherein M1 in Formula 1 comprises at least one selected from Ba, Sr, B, P, Y, Zr, Nb, Mo, Ta, and W.

9. The cathode active material according to claim 1, wherein M1 in Formula 1 is present in an amount of 0.001 to 10 mol% based on a total number of moles of matals of the overlithiated layered oxide.

10. The cathode active material according to claim 1, wherein a ratio (Li/Ni+Co+Mn) of a number of moles of lithium to a total number of moles of all metals contained among Ni, Co, or Mn in the overlithiated layered oxide represented by Formula 1 is 1.1 to 1.6.

11. The cathode active material according to claim 1, wherein a ratio (Mn/Ni) of a number of moles of Mn to a total number of moles of Ni in the overlithiated layered oxide represented by Formula 1 is 1 to 4.5.

12. A method of preparing the cathode active material for a secondary battery according to claim 1, the method comprising:
a first step of preparing a cathode active material precursor;
a second step of mixing the cathode active material precursor with a lithium compound and calcining the resulting mixture to form a lithium composite oxide; and
a third step of mixing the lithium composite oxide formed in the second step with a coating precursor to form an ion-conductive coating layer.

13. The method according to claim 12, wherein, in the second step, a compound containing M1 of Formula 1 is further mixed and calcined.

14. The method according to claim 12, wherein the precursor comprises at least one selected from TiO₂, Al₂O₃, Al(OH)₃, ZrO₂, and Zr(OH)₄.

15. A secondary battery comprising the cathode active material according to claim 1.
